# EUROPEAN PATENT APPLICATION

(11) **EP 2 944 193 A1**
(43) Date of publication of application: **18.11.2015**
(21) Application number: 15167384.5
(22) Date of filing: 12.05.2015
(51) Int. Cl.: A01N 25/00, A01N 25/26, A01N 25/28, A01N 65/36, A01N 65/00, A01N 37/18

(54) **METHOD AND APPARATUS FOR CONTROLLING FRUIT FLIES**

(30) Priority: 12.05.2014 GB 201408388; 10.03.2015 GB 201504004
(71) Applicant: Russell IPM Ltd, Deeside, Flintshire CH5 2LA (GB)
(72) Inventor: Al-Zaidi, Shakir, Deeside, CH5 3RQ (GB)
(74) Representative: Hamilton, Alistair

(57) **Abstract**

A method and apparatus for the control of various fruit flies are disclosed. The method operates by simultaneously attracting, separating and then killing male and female populations. Thus, control of fruit flies is achieved by a single procedure of attracting and killing the male and female population simultaneously and independently by means of attract and kill devises utilising pesticides and different specific attractants. Embodiments may be based on two components: one component is to attract and kill male fruit fly and the other component is to attract and kill female fruit flies. Both components can be deployed in a ratio and in specific configuration in the field to achieve the optimum result. The two components preferably remain active throughout the fruiting season or around 100-120 days subject to environmental conditions. The two components may be deployed in the manner of a semisolid mass applied manually or mechanically to a trunk of the tree. The two components may be deployed in a container (Fig 1) such as a polymeric body. Part of the container is preferably in the shape of a canopy (12) to hold the component and to protect it against the environmental elements.

## Description

The invention relates to a method and apparatus for controlling fruit flies, particularity, but not exclusively, the Tephritid fruit flies.

Tephritid fruit flies are of major economic importance in agriculture. Various species of fruit fly cause damage to fruit and other plant crops. The genus Bactrocera is of worldwide notoriety for its destructive impact on agriculture. B.dorsalis, B.zonata and B.invadense cause devastating damage on tropical and subtropical fruit production. The olive fruit fly (B. oleae), for example, feeds on only one plant: the wild or commercially cultivated olive, Olea europaea. It has the capacity to ruin 100% of an olive crop by damaging the fruit. Other Tephritid fruit flies of economic important include, for example, Mediterranean fruit fly (Ceratitis capitata) a worldwide problem for citrus production.

In most cases, farmers have no option but to apply chemical pesticides directly and as often as on weekly basis to control the problem. The high level pesticide residue remaining in the fruit as a result can renders the fruit unmarketable and is a potential health risk.

The Tephritid fly prefers to lay its eggs in the fruit, making it likely to travel and cross borders. Many stringent quarantine regulations are in place to control the spread of these fruit flies between countries, which presents significant trade barriers that obstruct farmers' access to lucrative markets.

One of the main challenges facing growers is the wide flight range of the insect. In other words, successful pesticide application in a grower's field does not grantee protection of the crop from a mated female flying into the protected field from neighbouring fields and laying her eggs in the mature and ready-to-harvest fruit. This has prompted crop protection professionals to propose an "area-wide" control and for this many technologies have been devised.

Many countries invest in the release of millions of sterile male insects in the hope of reducing the population of fruit fly. It is well accepted that this technique requires national funding and coordination, and a high level of logistics and organisation in a large cropping area to make any impact on the population. Yet it is also accepted that this technique cannot control the population on its own. In addition, females carrying sterile eggs will continue laying their eggs in the mature fruits causing punctures in the fruit skin, which provides an entry to various fungi that can ruins the fruit before its arrival to the shops.

Male annihilation technique is another method which was developed to control the fruit fly population by targeting the male population with insecticide application.

US-A-6 001 346 teaches the use of droplets made of emulsified wax mixed with male pheromones and insecticide to be applied over wide areas to achieve the male annihilation. Fruit fly males are extremely active, mating with several females a day. Even if the method achieves 95% male annihilation, the remaining few can achieve such a high mating rate that severe damage to crops can still occur.

Female fruit flies have also been targeted in attempts to achieve a successful control method. It is a common procedure to spray fruit crops with synthetic insecticide such as Malathion mixed with hydrolysed protein to attract the females to the toxicant droplet. GF120 is a ready-made blend of hydrolysed protein and bio-pesticide Spinosad. It does the same function with less harm but its cost and potential development of resistance limits its applications. South African patent 1999/00690 teaches how a fixed bait station containing female attractant and pesticides can provide an "attract and kill" method to protect citrus crop from female fruit fly. That disclosure was a step away from direct application of pesticides on crops but the short-range attraction of the bait stations made it necessary to provide one station every 25m². Despite its advantages, the large number of units needed and labour cost for its application has limited its application. A further limitation is that the method works well for large areas, but in smaller plots the good control can be achieved in the centre of the plot while significant damage will be sustained in the border areas. For smallholdings, this can represent substantial losses.

An aim of this invention is to provide a method and apparatus for controlling fruit flies which can work in small orchards just as effectively as in large plantations.

A further aim of this invention is to provide a method for controlling fruit flies without direct contact between the fruit and the applied pesticide.

A further aim of the invention is to provide a method of controlling fruit flies by a single application in a fruiting season.

In addition, it is an aim of the invention to provide a method and apparatus to control more than one species simultaneously if they are present in the same crop area.

To this end, from a first aspect, this invention provides a method for the control of various fruit flies by simultaneously attracting, separating (the male and female populations) and then killing male and female populations. Thus, control of fruit flies is achieved by a single procedure of attracting and killing the male and female population simultaneously and independently by means of attract and kill devises utilising pesticides and different specific attractants.

The male population is typically attracted to and killed at a location away from the female population. For example, the male population (or alternatively the female population) may be attracted to and killed at towards a parameter of a crop area. Alternatively or additionally, in which the female population may be attracted to and killed to location away from the male population. For example, the female (or alternatively the male population) population may be attracted towards the centre of an area of crop.

In embodiments of the invention, a formulated paste or gel may be applied directly to the trunk and/or the branches of a tree. Alternatively or additionally, a plurality of attract-and-kill units are deployed in locations within or adjacent to a growing crop, at a typical density of 100-400 attract and kill units in each hectare of fruiting crop. Each attract-and-kill unit typically contains an insecticide and one or other of an attractant for male insects or an attractant for female insects.

Embodiments of the invention are based on two components: one component is to attract and kill male fruit fly and the other component is to attract and kill female fruit flies. Both components are preferably to be deployed in a particular ratio and in specific configuration in the field to achieve the optimum result. The two components preferably remain active throughout the fruiting season or around 100-120 days subject to environmental conditions. The two components may be deployed in the manner of a semi-solid mass applied manually or mechanically to a trunk of the tree.

More preferably, the two components may be deployed in a container such as a polymeric body. Part of the container is preferably in the shape of a canopy to hold the component and to protect it against the environmental elements. Such a container may be designed in a manner which provides easy access for the fruit fly to approach and come into contact with the attract-and-kill composition held within it. The container may be formed as an injection moulded or vacuum-formed polymer. Such polymer could be polyethylene, polypropylene, polystyrene or polyethylene terephthalate or any UV-stabilized polymer. Another embodiment of the container may be made by means of press forming of cellulose substrate of plant origin fortified by a natural or synthetic resin to increase its resistance to rain damage. Such container can be advantageous for its more rapid biodegradation as compared to synthetic polymers.

The body may have a coloured exterior. The colour may be plain but more preferably it has an irregular marble pattern. Such patterns could be made from shades of yellow and/or orange colour. More preferably, the pattern is in a contrasting yellow/green marble pattern.

The body may be made with essential oils of plant origin incorporated in its structure in a manor to provide a slow release of essential oils of plant origin. The body may be made with whole essential oil or one or more of its components. These components may be known to the to those skilled in the technical field as those capable of assisting the fruit fly in its host recognition. By way of example, for embodiments targeted to the control of Ceratitis capitata, the preferred oil will typically be orange oil.

In embodiments, the component responsible for attracting and killing the female fruit fly may be include an aqueous solution of hydrolysed protein mixed with pesticides capable of remaining active in essentially water based solution for the life of the component. Alpha cypermethrine is one example of such insecticides which is capable of remaining active for a reasonably long time yet which possess a very low toxicity. Other pesticides are also capable of such performance. Such solution may be thickened using mineral-based thickeners. For example, hydrogel-forming polymers may be also used to provide a body for the solution. Such a thickened/gelled slurry may be contained or held within the structure of a porous member. Such member could be made from synthetic foam, light porous rock or natural fibre felt. The porous member could be secured within the canopy by mean of welding, adhesion or more preferably by securing it by further insertion of a frame made of polymer or metal or any mechanical devise capable of wedging the foam securely within the canopy.

In embodiments, the component responsible for attracting and killing the male fruit fly may be include male pheromone or parapheromone encapsulated within the structure of mineral or synthetic, micro-porous granules or beads suspended in mineral, animal or vegetable oil, thickened or gelled by suitable agent mixed with pesticides capable of remaining active in essentially oil or oil/water based emulsions for the life of the component.

Oil-water or wax-water emulsion such as that referred to US-A-6 001 346 can also be a suitable carrier to the pheromone containing micro-porous beads. Such beads of differing porosity may be sourced from natural zeolite, soft water diatomaceous earth, from modified glass or from a biodegradable matrix of organic origin. These may release the male pheromone over a period 2 to 3 times longer than conventional emulsions.

Alpha-cypermethrine and Abamectin are examples of such insecticides which are capable of remaining active for a reasonably long time yet possess a very low toxicity. Other pesticides are also capable of such performance.

Such thickened/gelled slurry may be contained or held within the structure of a porous member. Such member could be made from synthetic foam, light porous rock or natural fibre felt.

A porous member may be secured within the canopy by means of welding or adhesion or more preferably by securing it by further insertion of a frame made of polymer or metal or any mechanical devise capable of wedging the foam securely within the canopy.

The male control component and the female control component are typically to be applied together in the field in the ratio of 1:10 to 5:5, most preferably at the ratio of 1:5.

Placement of the male attract-and-kill components along the boundaries of a field has surprisingly reduced the number of visiting females to the field hence reducing their risk to maturing fruit and consequently reducing the number of female attract-and-kill component to achieve effective control.

In the specific following example, the application of 240 units in the ratio of 1:5 in 1 ha of citrus, a single application managed to secure 97% crop protection from Ceratitis capitata. 140 units in the ratio of 2:7 secured 95% protection.

The two components may be applied at the same time where the male component was placed on the boundary of the plot while the female controlling component was evenly distributed within the plot. The two components may be placed at least 5 m apart from each other. In typical conditions, a two-component system is capable of protecting fruits for up to 120 days using single application.

Embodiments of the invention may be capable of protecting plots as small as 5000m².

Embodiments may be capable of managing Ceratitis capitata in citrus, grapes and stone fruits among others when trimedlure was incorporated in the male attract-and-kill component. Embodiments may be capable of managing the damage of Bactrocera dorsalis or Zonata and invadense on tropical and semitropical fruits such as mango, papaya, figs and guava when methyl eugenol is incorporated in the male attract-and-kill component. Embodiments may be capable of managing Bactrocera cucurbit in melon, water melon and other cucurbatae crops when Cuelure is incorporated in the male attract-and-kill component.

Embodiments may be capable of managing the damage of more than one fruit fly existing in the same orchard by utilising the same female control component and placing the relevant male control components on the parameter of the orchard. Embodiments may be capable of managing many other fruit flies when the male attractant in the male attract and kill component is selected as the relevant pheromone or parapheromone known to those in the technical field.

Male and female fruit fly may be controlled simultaneously and effectively without any direct contact between fruits and the killing agent.

A method embodying the invention in which attracting and killing the male population selectively along the boundaries of the field surprisingly and unexpectedly reduced the number of female flies visiting the field and consequently reducing its risk to maturing fruit. As a consequence, the number of female attract-and-kill units required to control the female fruit fly damage was significantly reduced as compared with known control methods.

Embodiments of the invention may be capable of protecting the fruits throughout the fruiting season for up to 120 days by single application.

The pesticide used in embodiments of the invention can be selected from a range of insecticides known and registered for use against fruit flies and capable of remaining active in the formulation for the life of the apparatus. Cypermethine, alphacypermethirn, delta methrin, Oxymatrine, Abamactine, emamectin benzoate and Spinosad are some examples.

For Ceratitis capita the parapheromone may be Trimedlure. For Bactrocera dorsalis, B. Zonata ,B. Invadense the parapheromone may be Methyl eugenol. For Bactrocera cucurbitae the parapheromone may be Cuelure. When the target is Ceratitis capitata, orange peel oil or one or more of its components may be included in an attract-and-kill unit.

This invention may also provide a method for the control of several fruit flies by placing male attract and kill units of more than one species along the boundaries and placing a female component in the centre.

Embodiments of the invention will now be described in detail, by way of example, and with reference to the accompanying drawings, in which:

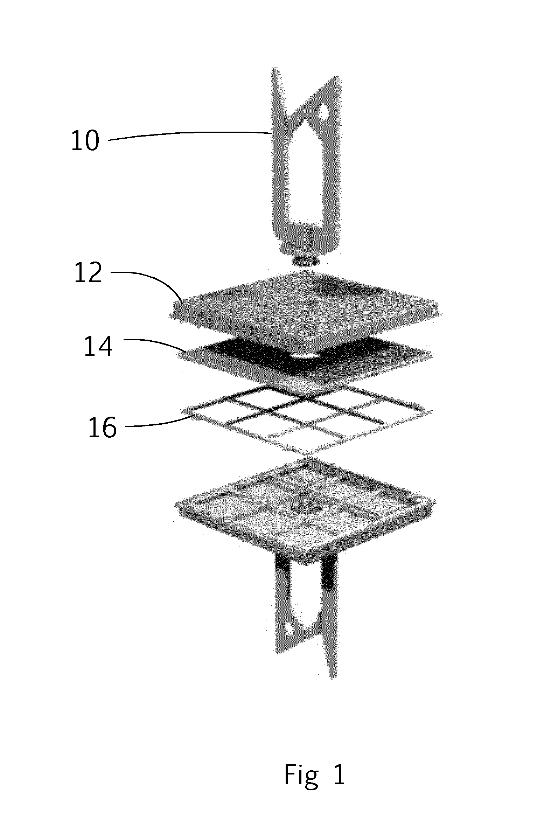

Figure 1 shows an example fruit fly attract-and-kill unit being a component of an embodiment of the invention;

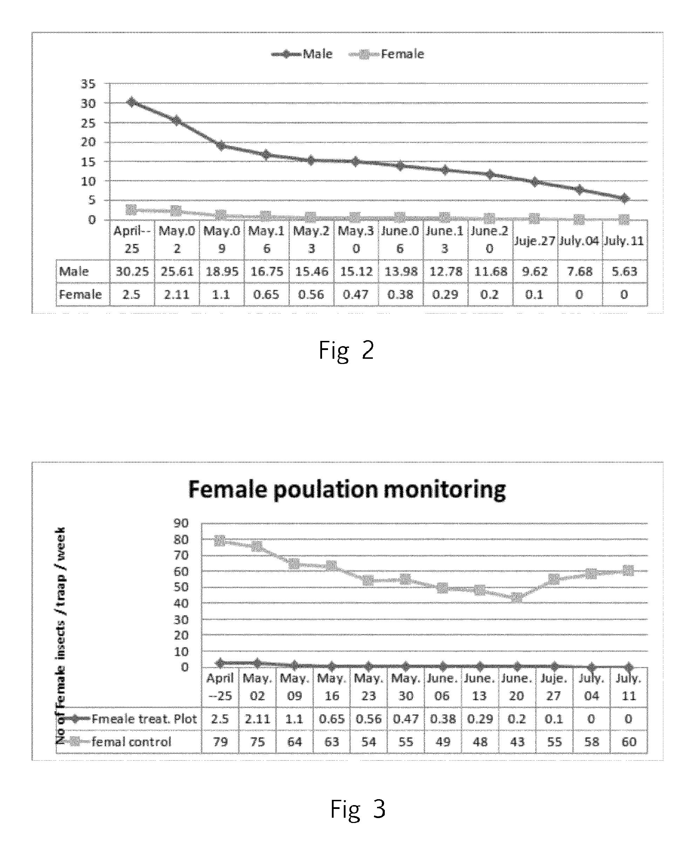

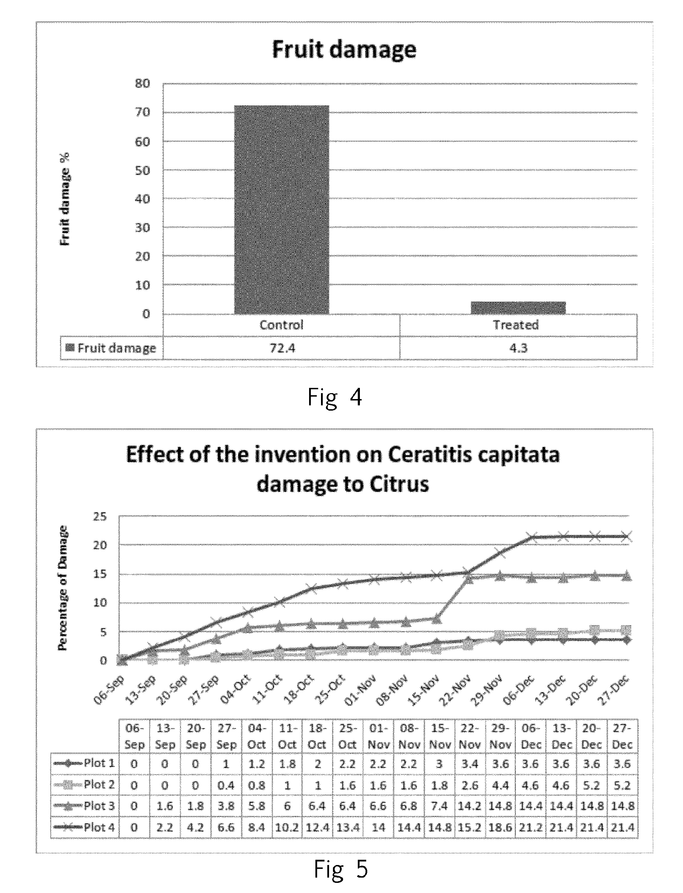

Figure 2, 3 and 4 are Graphs 1 to 3, referred to with reference to Example 1, below;
Figure 5 is graph 4 referred to with reference to Example 2, below; and

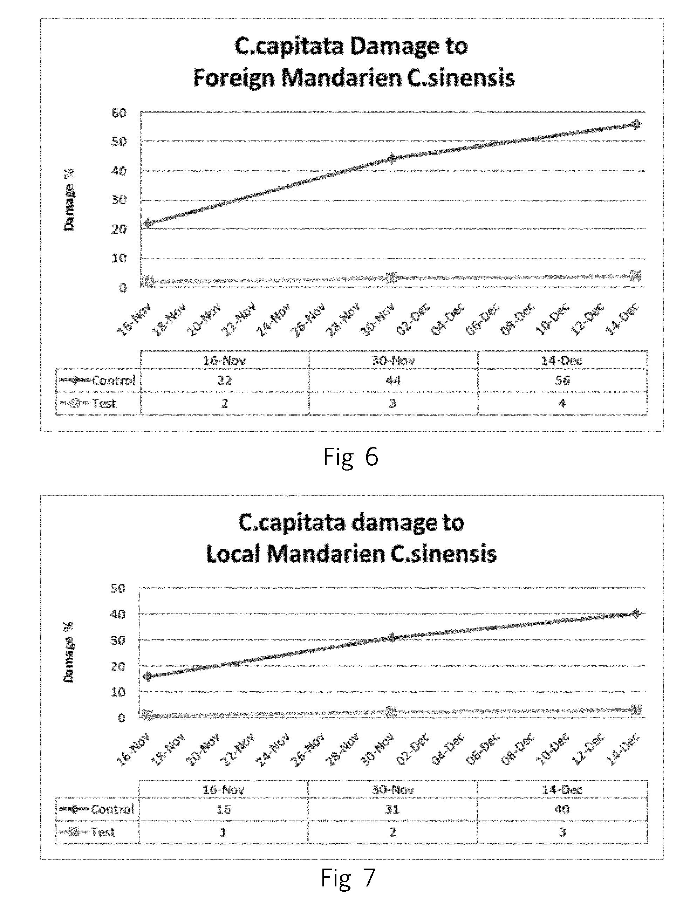

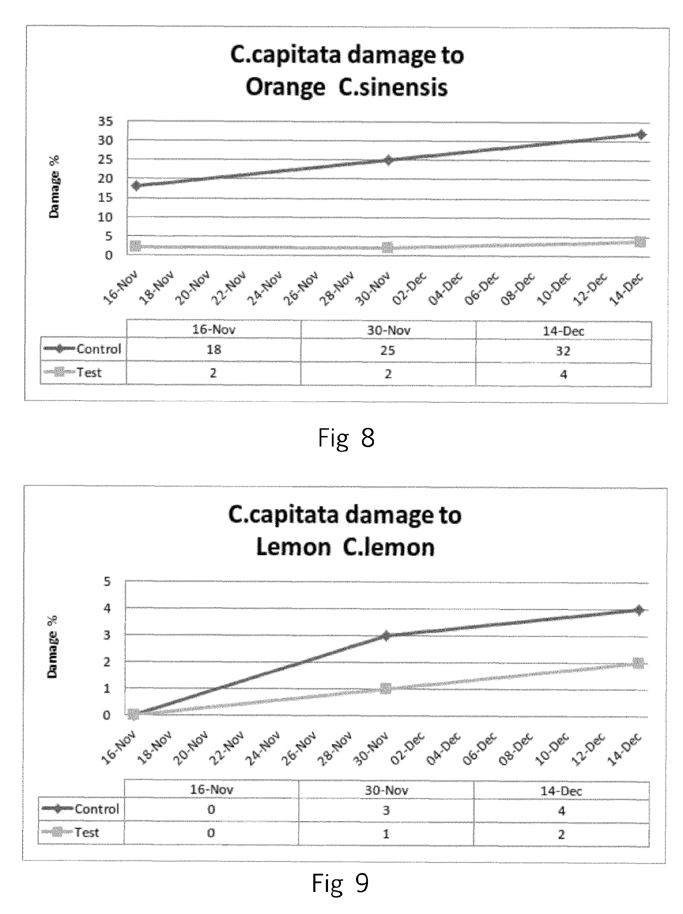

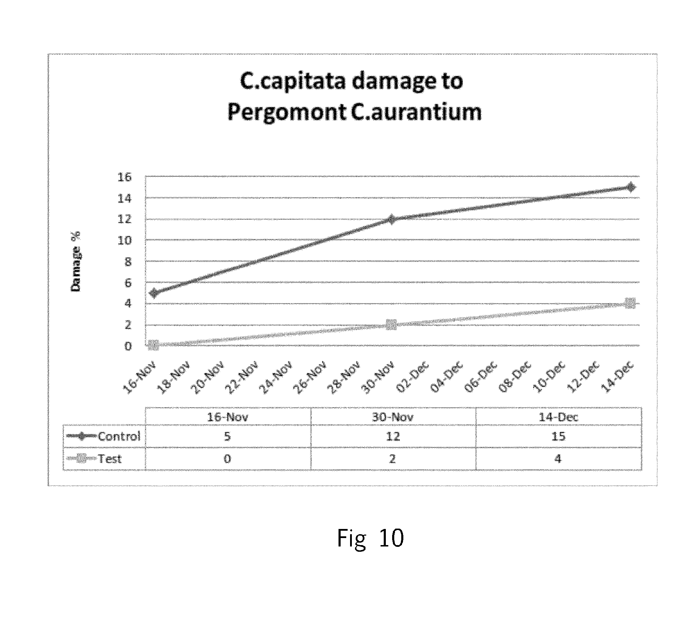

Figures 6 to 10 are graphs 5 to 9 referred to with reference to Example 3, below.

The attract-and-kill unit includes a hanging part 10, a plastic canopy 12, a foam or felt pad 14 and a securing frame 16.

### Example 1

Two plots of 0.3 Ha, each were cultivated with Bitter gourd, were selected to evaluate the effect of the invention on the melon fruit fly Bactrocera cucurbitae. The first plot was left untreated and considered as control plot. A second plot was treated with the invention at the rate of 200 Female components evenly distributed around the field and hung at 1.5 m high. The male component of the example embodiment was applied at the rate of 40 units/Ha along the boundary of the test plot. Both male and female populations were monitored using MPhil trap¹ and relevant attractant counting of trap catches crop sampling took place at the point of harvest of crop at both plots.
¹ What is this?

Graph 1 shows the male and female population level in the test plot. The females, these being the gender that causes damage, have been reduced to a negligible level over the life of the cropping season.

Graph 2 shows the female population level in both: the plot treated in accordance with an embodiment of the invention, versus that chemically-treated plot.

Graph 3 shows the comparison between the protection levels achieved in embodiments of the invention treated plot versus the plot treated in accordance with this example.

### Example 2

Four plots of 0.3 Hectare each cultivate with orange variety Thopmson were selected to evaluate the effect of the invention of Mediterranean Fruit Fly Ceratitis capitata.

Plot were treated as follows

| | Example 2-Female component | Example 2 - Male Component | Conventional Chemical treatment |
|---|---|---|---|
| Plot 1 | 200 units | 40 units | None |
| Plot 2 | 100 units | 40 units | None |
| Plot 3 | None | None | 7 treatments |
| Plot 4 | None | None | None |

2000 fruits were sampled weekly throughout the season at the average of 500 fruit per block samples well collected from four directions to eliminate any bias between the different sides of the trees. Samples were inspected for the percentage of punctures caused by the fruit fly on the fruit, while are still on the tree. The results are summarised in graph 4.

### Example 3

One plot of mixed citrus cultivations was selected to evaluate the relative protection level provided by the invention to different citrus varieties.

A 1 Ha plot cultivated with the following varieties:

| | |
|---|---|
| Foreign mandarin, | *C. reticulata* |
| Local mandarin, | *C. reticulata* |
| Orange | *C. Sinensis* |
| Lemon | *C. lemon* |
| Bergamot (Non Citrus host) | *C. aurantium* |

The crop was treated at the rate of 200 units of the female component of the embodiment with further 40 units of the male part of the embodiment was placed on the perimeter of the plot. 1000 samples were checked at different points of the cropping season. The protection was fairly consistent between varieties despite the relative host preference of the pest to some varieties compared to others. The damage data were collected periodically and presented below is presented in graphs 5 to 9.

## Claims

1. A method for the control of various fruit flies by simultaneously attracting, separating and then killing male and female populations.

2. A method according to claim 1 where the male population is attracted to and killed at a location away from the female population or *vice versa.*

3. A method according to claim 2 or where the male population is attracted to and killed towards a parameter of a crop area and/or the female population is attracted towards the centre of an area of crop.

4. A method according to any preceding claim which a formulated paste or gel is applied directly to the trunk and/or the branches of a tree.

5. A method according to any preceding claim in which a plurality of attract-and-kill units are deployed in locations within or adjacent to a growing crop, each attract-and-kill unit containing an insecticide and one or other of an attractant for male insects or an attractant for female insects.

6. A method according to any preceding claim in which the ratio of the male to female attract-and-kill units ranges from 1:10 to 5:5.

7. A method according to any preceding claim in which a fruit fly male parapheromone and/or female attractant and insecticide are presented in a controlled release manor.

8. An attract-and-kill unit suitable for use in a method according to any preceding claim.

9. An attract-and-kill unit according to claim 9 in which a male parapheromone has its release is controlled by means of double encapsulation of the active attractant by in a porous material suspended within a matrix of oil or oil-water emulsion.

10. An attract-and-kill unit according to claim 9 in which the porous material is glass, polymer, plastic or material of organic origin such as cellulose.

11. An attract-and-kill unit according to claim 9 or claim 10 in which the oil is of mineral, vegetable or animal origin.

12. An attract-and-kill unit according to any one of claims 8 to 11 having a female attractant that includes a water solution of hydrolysed protein mixed with insecticideand an organic or mineral thickening agent to produce a stable hydrogel.

13. An attract-and-kill unit according to any one of claims 8 to 12 including one or more of the parapheromone Trimedlure Methyl eugenol; Cuelure and a male parapheromone.

14. An attract-and-kill unit according to any one of claims 8 to 13 including essential oils that have been injected in its structure such essential oils contains plant volatiles from the preferred host to the fruit fly.

15. An attract-and-kill unit according to claim 14 having orange peel oil or one or more of its components injected during the process of manufacturing the container.

16. An attract-and-kill unit according to any one of claims 8 to 15 in which the container has two colours with the plastic material during the forming process to create an irregular pattern or marble effect.
